Europäisches Patentamt

European Patent Office

Office européen des brevets

(11) Publication number: **0 479 424 A1**

# EUROPEAN PATENT APPLICATION

(21) Application number: **91307638.6**

(22) Date of filing: **19.08.91**

(51) Int. Cl.5: **B64D 25/10**

(30) Priority: **05.10.90 GB 9021666**

(43) Date of publication of application:
**08.04.92 Bulletin 92/15**

(84) Designated Contracting States:
**FR GB IT**

(71) Applicant: **BRITISH AEROSPACE PUBLIC LIMITED COMPANY**
**11 Strand**
**London WC2N 5JT(GB)**

(72) Inventor: **Aldridge, William John British Aerospace Space Systems Ltd. FPC 321, P.O. Box 5 Filton, Bristol(GB)**
Inventor: **Parker, David Huw British Aerospace Space Systems Ltd. FPC 321, P.O. Box 5 Filton, Bristol(GB)**
Inventor: **LeBrun, David Francis British Aerospace Space Systems Ltd. FPC 321, P.O. Box 5 Filton, Bristol(GB)**

(74) Representative: **Rooney, Paul Blaise et al British Aerospace plc Corporate IPR Department, Headquarters P.O. Box 87 Building O191 Royal Aerospace Establishment Farnborough Hants GU14 6YU(GB)**

(54) **A propulsion assembly for an aerospace vehicle ejector seat.**

(57) A propulsion assembly (1) for an aerospace vehicle ejector seat (2) has a rocket motor or cartridge (3) fixably attachable to the seat (2) to provide a mainstream (4) of hot gas for propelling the seat (2) along a trajectory after separation from the vehicle. Nozzle means are provided attachable to, or forming part of the motor (3) for directing the main gas stream (4). The nozzle means has a wall (6) defining an exit passage (7) for the main gas stream (4) orifice (9) opening into the exit passage (7) through the wall (6) and pipe means connecting the orifice means (9) to the motor (3) so that secondary hot gas can be passed from the motor (3) upstream of the nozzle means, through the orifice means (9) into the exit passage (7) and into the main gas stream (4) at an angle thereto to modify the direction of thrust of the main gas stream (4).

Fig.1.

This invention relates to a propulsion assembly for an aerospace vehicle ejector seat and to an aerospace vehicle ejector seat incorporating such a propulsion assembly.

An aerospace vehicle ejector seat is known provided with a fixed rocket motor or cartridge rigidly attached to the seat. When the ejector seat is separated from the aerospace vehicle it follows a trajectory which is determined by the initial pointing direction of the outlet means from the rocket motor or the cartridge, such as a nozzle, the centre of gravity to rocket motor or cartridge thrust line mismatch and the aerodynamics of the pilot/seat combination. With such conventional ejection seats the inability to control pitch and roll rate of the seat after ejection from the parent aerospace vehicle may make it difficult, in the case where the parent vehicle is an aircraft, for a parachute to deploy correctly and in the case of multi-seat ejection from an aircraft may lead to post-ejection collisions between the moving ejection seats. Where the parent aerospace vehicle is a space launch vehicle inability to control pitch and roll rate after ejection from the parent aerospace vehicle may reduce the chances of the ejector seat clearing the launch vehicle adequately in the event of fire. Additionally in both instances it is necessary to control the trajectory of an ejector seat after ejection from a parent aerospace vehicle in cases where the vehicle is on or near the ground so as to ensure that the ejector seat trajectory is away from the ground and not towards it to ensure satisfactory deployment of the parachute.

There is thus a need for a generally improved propulsion assembly for an aerospace vehicle ejector seat which enables the trajectory of the seat to be controlled after separation from a parent aerospace vehicle.

According to one aspect of the present invention there is provided a propulsion assembly for an aerospace vehicle ejector seat, characterised by the inclusion of a rocket motor or cartridge fixably attachable to an aerospace vehicle ejector seat and operable to provide a main stream of hot gas for propelling the seat along a trajectory after separation from the vehicle, nozzle means attachable to, or forming part of, the rocket motor or cartridge for directing the main hot gas stream, which nozzle means has at least one wall defining an exit passage along and through which the main hot gas stream is passed from the rocket motor or cartridge, orifice means opening into the exit passage through said at least one wall, and pipe means connecting the orifice means to the rocket motor or cartridge whereby secondary hot gas can be passed from the rocket motor or cartridge upstream of the nozzle means, through the orifice means into the exit passage and into the main gas stream at an angle thereto to modify the direction of thrust of said main gas stream.

Preferably the assembly includes variably adjustable valve means incorporated in the pipe means between the rocket motor or cartridge and orifice means and operable to control the rate of flow of the secondary hot gas through the orifice means to control the degree of deflection of the main hot gas stream issuing from the nozzle means.

Conveniently the exit passage is substantially circular in cross section, the orifice means comprises four equi-spaced holes opening substantially radially through the passage wall, the pipe means comprises four pipelines and the valve means comprises four individually variably adjustable control valves associated one with each pipeline.

Advantageously the assembly includes a control unit having at least one rate gyro and processing electronics for generating a rate demand signal from initial position data obtainable from the aerospace vehicle prior to separation of the seat therefrom, for controllably adjusting the control valves to control the pitch rate and/or roll rate of the ejector seat, and thereby the trajectory thereof after separation from the aerospace vehicle.

Preferably the control unit includes a first summer for combining the rate demand signal generated in the processing electronics with feedback obtained from the rate gyro, integration means for integrating the rate error and providing an integral of rate error output signal, and a second summer which is operable to combine the integral of rate error output signal with a proportional gain term and provide an output control signal to the or each control valve.

According to a further aspect of the present invention there is provided an aerospace vehicle ejector seat having a propulsion assembly substantially as hereinbefore described.

For a better understanding of the present invention, and to show how the same may be carried into effect, reference will now be made, by way of example to the accompanying drawings, in which;

Figure 1 is diagrammatic partially sectioned view of a propulsion assembly according to a first embodiment of the invention for an aerospace vehicle ejector seat, and

Figure 2 is a schematic block diagram of a control unit of an assembly of the invention in association with an ejector seat to provide a control loop for thrust vector control.

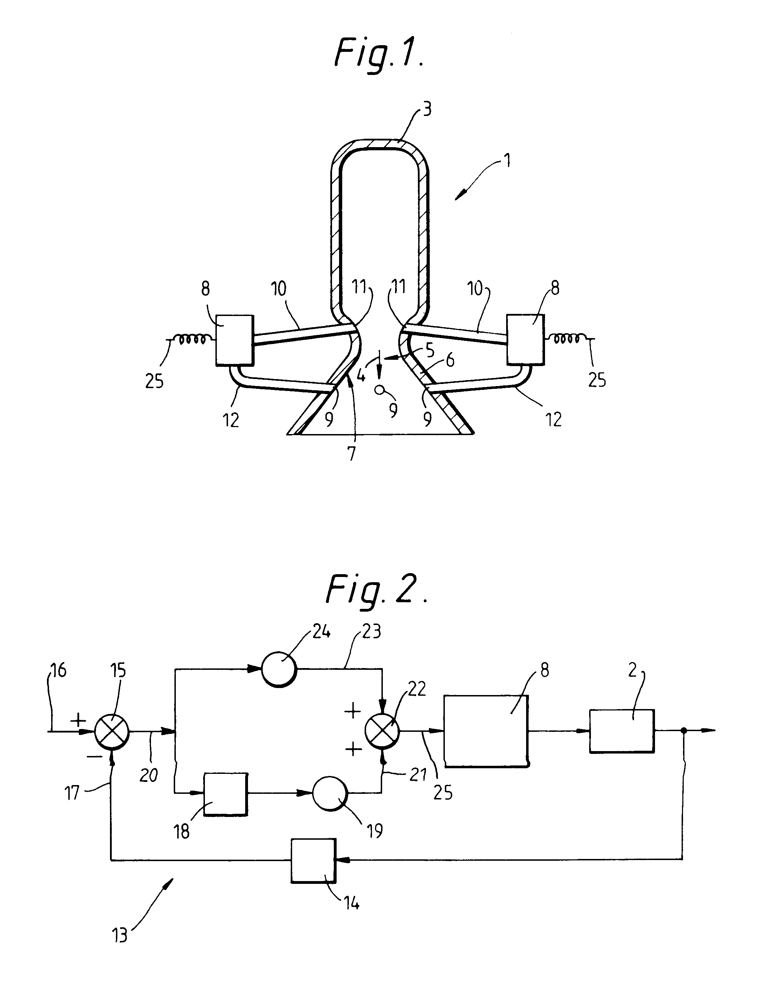

As shown in the accompanying drawings a propulsion assembly of the invention generally referenced at 1 in Figure 1 for an aerospace vehicle ejector seat 2, for an aerospace vehicle such as an aeroplane, includes a rocket motor 3 or cartridge fixedly attachable to the seat 2. Although, for the sake of convenience, the invention is described herein in terms of a single rocket motor 3 it is of course possible for more than one such motor 3, ie more than one such propulsion assembly 1, to be attached to a seat 2. In any event the or each propulsion assembly 1 and the or each rocket motor 3 is or are attached to the seat so that the motor 3 lies either below or behind the seat 2.

The function of the rocket motor 3 or cartridge is to provide a mainstream of hot gas 4 for propelling the seat 2 along a trajectory after separation from the vehicle. To this end the motor 3 includes nozzle means 5 attachable to or forming part of the motor 3 for directing the main hot gas stream 4. The nozzle means 5 has at least one wall 6 defining an exit passage 7 along and through which the main hot gas stream 4 is passed from the motor 3. Orifice means open into the exit passage 7 through the wall 6 and pipe means connect the orifice means to the motor 3 whereby secondary hot gas can be passed from the motor 3 upstream of the nozzle means 5 through the orifice means into the exit passage 7 and into the main gas stream 4 at an angle thereto to modify the direction of thrust of the main gas stream 4.

In the embodiment illustrated in Figure 1 variably adjustable valve means, in this case four individually variably adjustable control valves 8 (of which only two are shown in Figure 1) are incorporated in the pipe means between the motor 3 and orifice means and or operable to control the rate of flow of the secondary hot gas through the orifice means to control the degree of deflection of the main hot gas stream 4 issuing from the nozzle means 5. To this end the exit passage 7 has a substantially circular cross-section and the orifice means comprises four equi-spaced holes 9 opening substantially radially through the passage wall 6. The pipe means comprises four pipelines each made up of a first pipe 10 connecting the associated control valve 8 to the motor 3 upstream of the nozzle means 5 via tappings 11 and a second pipe 12 connecting the associated control valve 8 to the associated hole 9 in the wall 6. Although for convenience the nozzle means 5 has been shown as having a substantially circular cross-section exit passage 7, it is to be understood that any other convenient cross section of exit passage may be provided. Additionally although the holes 9 are shown in the illustrated embodiment as extending radially into the exit passage 5 at equi-distant spacings therearound it is to be understood that the holes 9 could open into the exit passage at any desired spacings and at any angle desired to the direction of thrust of the main hot gas stream 4. Each control valve 8 is continuously variably adjusted such that the gas flow through the holes 9 deflects the main hot gas stream 4 to provide continuous control of the seat velocity vector for the duration of the motor burn. This then determines the subsequent trajectory of the unpowered seat when burn of the motor 3 has terminated.

The position or travel of the control valves 8 is determined by a control unit 13 generally indicated in Figure 2 which has at least one rate gyro 14 and processing electronics for generating a rate demand from initial position data signal obtainable from the aerospace vehicle. The parent aerospace vehicle will have an on-board guidance system which will be able accurately to predict the position of the vehicle at the time of ejection of the seat 2. Therefore a pitch rate demand, calculated by the processing electronics to bring the seat 2 to the correct flight path angle at motor burn out, is passed to the control valves 8. The large control power available from vectoring the rocket motor thrust line means that pitch rate can be controlled precisely. By similar means the roll rate can be controlled. The roll rate facility may not be needed in single seat applications but can be used to provide correct post ejection separation in multi-seat ejection situations.

Hence the function of the control unit 13 is controllably to adjust the control valves 8 to control the pitch rate and roll rate of the ejector seat 2 and thereby the trajectory thereof after separation from the aerospace vehicle.

As shown in Figure 2 the control unit 13 includes a first summer 15 which combines the rate demand signal 16 generated in the processing electronics from the initial position data obtained from the parent aerospace vehicle's Real Time Data Bus with the feedback 17 from the rate gyro 14. Integration means in the form of an integrator 18 and integrator gain 19 are provided for integrating the rate error as signal 20 and providing an integral of rate error output signal 21 to a second summer 22 which is operable to combine the integral of rate error output signal 21 with a proportional gain term 23 generated by a proportional gain 24 and provide an output control signal 25 to each or the control valve 8. The integral of rate error 21 is introduced and combined with the proportional term 23 at the second summer 22 to avoid the gradual change in pitch or roll which would be caused by the use of a proportional rate only control system.

## Claims

1. A propulsion assembly for an aerospace vehicle ejector seat (2), characterised by the inclusion of a rocket motor or cartridge (3) fixedly attachable to an aerospace vehicle ejector seat (2) and operable to provide a mainstream of hot gas for propelling the seat (2) along a trajectory after separation from the vehicle, nozzle means (5) attachable to, or forming part of, the rocket motor or cartridge (3) for directing the main hot gas stream (4), which nozzle means (5) has at least one wall (6) defining an exit passage (7) along and through which the main hot gas stream is passed from the rocket motor or cartridge (3), orifice means (9) opening into the exit passage (7) through said at least one wall (6), and pipe means (12) connecting the orifice means (9) to the rocket motor or cartridge (3) whereby secondary hot gas can be passed from the rocket motor or cartridge (3) upstream of the nozzle means (5), through the orifice means (9) into the exit passage (7) and into the main gas stream at an angle thereto to modify the direction of thrust of said main gas stream.

2. An assembly according to Claim 1, including variably adjustable valve means (8) incorporated in the pipe means (12) between the rocket motor or cartridge (3) and orifice means (9) and operable to control the rate of flow of the secondary hot gas through the orifice means to control the degree of deflection of the main hot gas stream issuing from the nozzle means (5).

3. An assembly according to Claim 2, wherein the exit passage (7) is substantially circular in cross section, the orifice means (9) comprises four equi-spaced holes (9) opening substantially radially through the passage wall (6), the pipe means (12) comprises four pipelines (12) and the valve means (8) comprises four individually variably adjustable control valves (8) associated one with each pipeline (12).

4. An assembly according to Claim 3, including a control unit (13) having at least one rate gyro (14) and processing electronics (13) for generating a rate demand signal from initial position data obtainable from the aerospace vehicle, for controllably adjusting the control valves (8) to control the pitch rate and/or roll rate of the ejector seat (2), and thereby the trajectory thereof after separation from the vehicle.

5. An assembly according to Claim 4, wherein the control unit (13) includes a first summer (15) for combining the rate demand signal (16) generated in the processing electronics with feedback obtained from the rate gyro, integration means (18) for integrating the rate error and providing an integral of rate error output signal (21) and a second summer (22) which is operable to combining the integral of rate error output signal (21) with a proportional gain term (23) and provide an output control signal (25) to the or each control valve (8).

6. An aerospace vehicle ejector seat having a propulsion assembly according to any one of Claims 1 to 6.

# Fig.1.

# Fig.2.

# European Patent Office

## EUROPEAN SEARCH REPORT

Application Number

**EP 91 30 7638**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | US-A-3 592 419   (HANTZSCH) | 1 | B 64 D 25/10 |
| A | (* column 2, line 65 - column 3, line 5 *) | 4,6 | |
| | – – – | | |
| Y | US-A-2 943 821   (WETHERBEE) | 1 | |
| A | (* column 1, line 72 - column 2, line 16 * ) | 2,3,4 | |
| | * column 2, line 60 - column 3, line 33 * * | | |
| | – – – | | |
| A | US-A-3 570 404   (POPE) | 5 | |
| | * the whole document * * | | |
| | – – – | | |
| A | US-A-3 740 005   (RIVERS) | 1 | |
| | * the whole document * * | | |
| | – – – – – | | |

| | TECHNICAL FIELDS SEARCHED (Int. Cl.5) |
|---|---|
| | B 64 D |
| | B 64 C |
| | F 02 K |

The present search report has been drawn up for all claims

| Place of search | Date of completion of search | Examiner |
|---|---|---|
| The Hague | 13 January 92 | HAUGLUSTAINE H.P.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

                    

& : member of the same patent family, corresponding document